# EUROPEAN PATENT SPECIFICATION

(11) **EP 4 614 880 B1**
(45) Date of publication and mention of the grant of the patent: **27.05.2026**
(21) Application number: 24162152.3
(22) Date of filing: 07.03.2024
(51) Int. Cl.: H04L 9/40, H04W 12/06, H04W 12/08

(54) **USER AUTHENTICATION IN NETWORK ENVIRONMENTS**
BENUTZERAUTHENTIFIZIERUNG IN NETZWERKUMGEBUNGEN
AUTHENTIFICATION D'UTILISATEUR DANS DES ENVIRONNEMENTS DE RÉSEAU

(43) Date of publication of application: 10.09.2025
(73) Proprietor: Deutsche Telekom AG, 53113 Bonn (DE)
(72) Inventor: Schneider, Daniela, Wien (AT)
(74) Representative: karo IP

(56) References cited:
- EP-A1- 3 852 338
- WO-A1-2022/258180

## Description

The invention relates to a method and a user equipment for authentication and/or authorization of a user in network environments.

Today's 3GPP based networks use the credentials stored on the SIM card to authenticate the SIM card to the network. The problem with this approach is that one is actually authenticating the SIM card (IMSI) and therefore the subscriber, but not the actual user behind the SIM who actually uses a user equipment to access a service.

For example, if the SIM card is used in a mobile WLAN router, the SIM card is used to access the mobile network, and the contract to which the SIM card is tied identifies the contract holder. However, the actual user who, for example, is surfing the Internet via that particular WLAN router cannot be identified.

Therefore, no judgement can be made as to whether that user is authorized to use a particular service, as the user cannot be identified and authorization cannot be verified.

WO 2022/96125 A1 defines a mechanism to replace the SUCI with another identifier, the DIG-ID (Digital IDentifier), where one component of the DIG-ID is a kind of DID.

However, this idea only aims to use the DIG-ID to implement UE access and not to identify the actual end user. Therefore, this approach only replaces one parameter with another parameter of a different format, without directly identifying the user. Replacing the SUCI with a kind of DID does not change the fact that the parameters on the SIM card only identify a particular contract and the contract holder, but it does not help at all to identify the actual user using the connections established with that SIM.

WO 2021/173265 A1 is entitled 'Decentralised authentication anchored by decentralised identifiers'. This document describes a generic approach to provide DIDs (Decentralised Identifiers) and VCs (Verifiable Credentials) to end users also using a mobile phone, but does not describe how to implement the transport of VCs in 3GPP systems.

WO 2022/258180 A1 discloses aspects of utilizing DIDs and VCs for authentication and their transmission to the network but not in connection with 3GPP registration and authentication procedures.

In the view of above, it is an object of the present invention to provide techniques to enable verification and/or authentication of users in network environments.

This object is solved by the features of the independent claims.

The features of the various aspects of the invention described below or the various examples of implementation may be combined with each other, unless this is explicitly excluded or is technically impossible.

For example, technically the invention can be based on the 3GPP version according to release 18 (e.g. version of Nov. 2023) or 19 as valid on the application date.

According to a first aspect of the invention, a method is disclosed for authentication and/or authorization of a user in network environments especially after a request of a service wihch may be forced by the user or automatically by the UE when powering on, wherein the method comprises the following steps
- A trusted issuer provisions an user Identifier (ID) as a Decentralised IDentifier (DID) and a DID-bound-Verifiable Credentials (VC) to a User Equipment (UE);
   ∘ the DID and a DID-bound-VC are data types that can be unambiguously related to a certain user and not to certain device or certain subscription; the UE can be a tablet, smart phone or a normal computing device or an loT-device that can carry a (e)SIM card or not;
   ∘ the DID and the DID-bound-VC are stored on the UE;
- A SIM (Subscriber Identity Module) or eSIM (embedded SIM) provisions network registration data of a 3GPP network provider to a 3GPP network access module being part of the UE;
   ∘ the network registration data can be the data that is contained within a (e)SIM and typically comprises the IMSI, SUCI and/or SUPI. This network registration data is related to the subscriber of a contract to access the network. However, this subscriber is not necessarily the actual user of the UE. By providing this data to the network access module, it can be sent to the network operator;
- The network access module sends a network access registration message to the Core Network (CN) of a network provider, wherein the network access registration message comprises the network registration data of a 3GPP network provider. The network access module is registered in the network of the network operator;
   ∘ this step serves the purpose that an actual communication between the network access module and/or the UE and the 3GPP network operator can be established;
- Transmitting the DID and the DID-bound-VC from the UE to the network access module;
   ∘ this step serves the purpose that the network access module can communicate the DID and the DID-bound-VC to the network operator;
- The network access module (110) sends a user authentication
   - Dfxws<message comprising the DID and the DID-bound-VC to the 3GPP core network of the network operator ;
      ∘ the user authentication message can be used to perform user authentication and/or authorization;
      ∘ the user authentication message can also comprise a service request. The user authentication message provides information to identify the actual user of the UE that can be different from the subscriber of the (e)SIM;
   - Based on the DID and the DID-bound-VC, in particular by the 3GPP core network respectively the network operator, a verification unit performes the authentication and/or authorization process. Upon successful authentication, the verification unit communicates the result to the UE (100), granting the user access to a requested service .
      ∘ the verification unit can be located or associated to the core network of the network operator; the verification unit can also pr74ovide the requested service and the UE with the result of the a/uthentication and/or authorization process, wherein the service can be started after successful authentication and/or authorization.

Hence, for the first time, the invention enables the verification and/or authentication of the actual user of the UE, who may be different from the subscriber of the (e)SIM. This greatly increases security aspects when running services in a network environment.

The invention introduces new possibilities enabled by DIDs and/or VCs, in contrast to the "contract owner" IDs (IMSI; SUCI; SUPI) stored on a SIM/eSIM, which only identify a specific contract. Hence, DIDs and/or VCs can be described as being real user ID credentials. Contract owner IDs are primarily designed for 3GPP-based procedures and scenarios and are not intended for use outside the telecommunications domain, as especially the IMSI/SUPI are intentionally highly protected and are not meant to be shared with anyone. The User ID credentials, however, can be shared with other network operators and/or service providers, offering greater flexibility in the authentication and/or authorization process. Hence, access to a service can be based on the actual user.

In an embodiment, the verification unit is assigned to the 3GPP network operator or the 3GPP network operator may transmit the *DID and the DID-bound VC to an external verification unit.

If the verification unit is assigned to the 3GPP network operator, the verification process can be performed efficiently, and the network operator can generally be trusted . Having an external verification unit provides further flexibility in the authentication and/or authorization process but is less efficient as the network operator needs to transmit the user ID credentials to the external verification unit.

The DID and the DID-bound-VC are stored in a secure storage of the UE, and authentication must be performed before the DID and the DID-bound-VC can be transmitted from the UE to the network access module. In that context, the UE can be a computing device that is in data connection with the network access module.

This provides the advantage that only the user who owns the user ID credentials can open the secure storage and trigger the transmission of the user ID credentials to the network access module and from there to the network operator. The following techniques can be used to secure the user ID credentials: code protection; fingerprint protection, audio protection and/or face ID protection or any other protection mechanism available for protecting content of a digital secure storage.

The DID and the relevant DID-bound-VC(s) are transmitted to the verification unit.

In an embodiment, the user authentication message is linked to the network access registration message.

This provides the advantage that the subscription that is being used by the UE to get network access can also be related to the user data. For example, this provides the advantage that it can be specified that only certain users are allowed to use the subscription.

The following further advantages can be obtained by linking the messages: i) Synchronization: By linking the two messages, the processing of the user's authentication details and their network access credentials is syncronized. This reduces the risk of inconsistencies between the user's profile and their access permissions. ii) Efficiency: Combining these messages streamlines the registration process for users. They don't have to separately register for network access after completing their user registration, saving time and effort. iii) Security: Linking user registration with network access registration enhances security by ensuring that only authorized users can access the network. It helps prevent unauthorized access attempts or fraudulent registrations. iv) User experience: A seamless registration process improves the overall user experience. Users are less likely to encounter confusion or frustration when registering for both user accounts and network access simultaneously or separately.

In an embodiment, the network access registration message comprises the user authentication message.

This provides the advantage that user authentication and/or authorization can be performed more efficiently without further signaling and in particular at a very early stage in the communication process. This is in particular beneficial if only certain users are allowed to use a subscription to a network operator.

In an embodiment, the user authentication message of the UE is translated into a 3GPP compatible data type. In particular, the 3GPP network access module performs this translation.

This provides the advantage that even non-3GPP devices can be used within the context of the invention. It is of particular advantage to perform this translation at the 3GPP network access module as it is possible to provide the user authentication and/or authorization from non-3GPP device that are connected to the network access module.

The user equipment (UE) comprises the 3GPP network access module.

This provides the advantage, that external network access module is not required if the user wants to undergo a user authentication and/or authorization to use the UE to gain access to the service.

According to a second aspect of the invention, it is disclosed to use the method described above for the following use cases:
- an operator and/or a third party can perform a user verification process,
- for end users: enhanced security procedures and/or direct pay options, and/or
- protection issues when accessing services;

For business customers, a network operator can provide access management to the business infrastructure or network. The operator is able to verify the VCs on behalf of the business customer authorizing access to a customer service or customer network.

For (end) users there are several possible scenarios, such as enhanced security for different service access scenarios, a roaming customer could pay directly with their payment credentials for a certain number of minutes or bits like in a voucher system; or a customer connecting a WLAN hotspot for guests can use the credentials for access management; or access to service landscapes is enabled by verifying the credentials.

For operators, it enables the development of new business opportunities. The relationship between the customer and the network can be strengthened and the operator gains more transparent information about who is really using its networks and for what applications, across mobile/fixed networks and private and public WLANs. Furthermore, an operator only needs to implement this ONE highly flexible mechanism to support a huge variety of different use cases for different customer needs and very different use cases.

Once the credentials are available on the network, a variety of use cases can be supported by using the same technical mechanism for a number of use cases. The methods and characteristics of human DIDs/VCs are currently being adopted by a wide range of government agencies to move relationship management in a digital direction.

According to a third embodiment of the invention, a network access module adapted to transmit a user authentication message comprising a user-bound DID-bound VC is disclosed, wherein the network access module is adapted to convert the user authentication message of the user terminal into a 3GPP compatible data type.

This inventive network access module provides the advantages described before within the context of the method.

According to a fourth aspect of the invention a UE designed for authentication and/or authorization of users in network environments is disclosed, wherein the UE is configured
- to store a user ID as a DID and a DID-bound-VC;
- to send a user authentication message comprising the DID and the DID-bound-VC to the 3GPP network operator by means of the network access module.

In preferred embodiments, the UE can be configured to execute the method steps described above associated to the UE.

The UE provides the advantages described before within the context of the method.

In an embodiment, the UE comprises the network access module. For example, the UE can be a smart phone, smart watch, tablet etc. the UE can also be configured to retrieve and process the answer of the verification unit stating if the verification of the user has been successful or not.

According to a fifths aspect of the invention, a communication system, wherein the communication system is configured to execute the method described above.

The communication system provides the advantages described before within the context of the method.

In an embodiment, the network layer of the 3GPP network provider supporting the transport of DID and the DID-bound VC is configured to act as an authentication and/or authorization proxy.

This provides the advantage of having a clear distinction between the application/service layer and/or the network layer.

In the following, preferred implementation examples of the present invention are explained with reference to the accompanying figure:
- Fig. 1:: shows a trust triangle to verify a DID-bound-VC;
- Fig. 2:: shows an architecture overview according to a first embodiment of the invention;
- Fig. 3:: shows a process diagram for a combined registration procedure for UE registration and user authentication/authorization based on IMSI/SUPI for devices and DID-bound-VCs for human users according to Fig. 2;
- Fig. 4:: registration request message as illustrated according to an embodiment of the invention;
- Fig. 5:: shows an architecture overview according to a second embodiment of the invention;
- Fig. 6:: shows a process diagram for a separated registration procedure for UE registration and user authentication/authorization based on IMSI/SUPI for devices and DID-bound-VCs for human users according to Fig. 5;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below. In particular, the invention covers many use cases that use the same mechanisms.

Decentralized Identifiers (DID) can be used to manage identities in a decentralized manner without centralized identity databases and CAs. The decentralization aspect of DIDs bears the inherent potential to unify access management procedures e.g. in 6G across-domains by using a DL (Distributed Ledger) among all involved actors of a PLMN ecosystem as the single source of truth for non-privacy-sensitive access management data. A DID infrastructure makes it also possible to store DIDs according to the principles of Self-Sovereign Identity (SSI) privacy-preserving in a VDR (Verifiable Data Registry) like a database or a distributed ledger or any other storage solution. Applying DIDs in communication systems to decentralize IDM will not only lower the risk of having a single point of failure or attack due to the removal of CAs but they will also enable MNOs (Mobile Network Operator) to adhere to privacy-by-design principles with SSI.

A DID is a unique identifier, that can comprise an alphanumeric string, that refers to an IS (Identity subject) (here denoted as a DID subject), and resolves to a DID document. A DID subject can be a person or any type of network element, e.g., a subscriber, an MNO or a NF. A DID document can also comprise among other information, verification material, e.g., a public key of the DID subject for authentication, authorization, and other purposes. Hence, a DID can bind a DID subject to its DID document just like a X.509 certificate binds an identity to a public key. Neither the DID nor the DID document need to reveal or contain any personal data. The fundamental idea of the DID concept is to manage and share non-privacy-sensitive verification material in the form of DID documents among interacting stakeholders, e. g. via a DL while the associated privacy-sensitive personal data of a DID subject is kept locally, off the DL, ideally at the DID subject's respectively stakeholder's premises. Hence, the DL can be used to persist and share identity-related data in a fully synchronized and tamper-proof manner among all actors of a multi-stakeholder network.

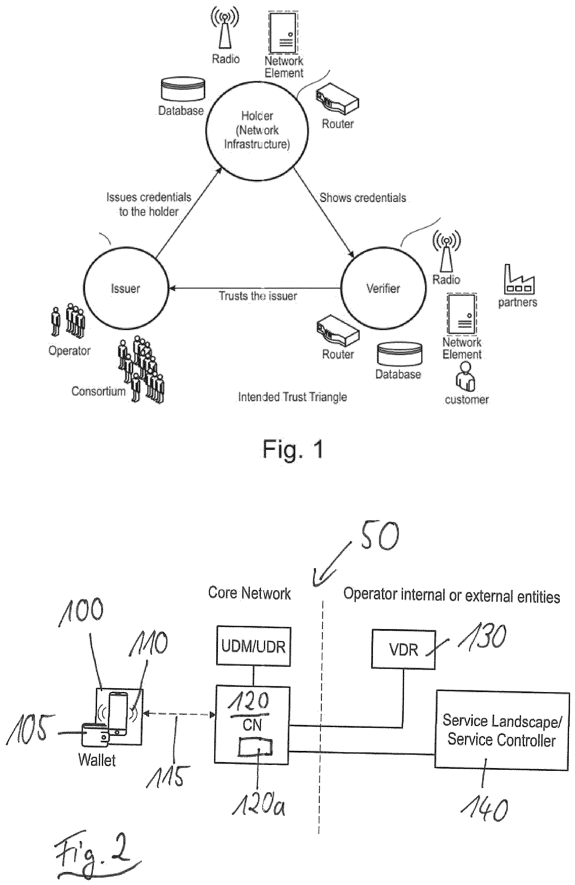

Self-sovereignty over any information describing an entity is the principal objective behind the latest SSI paradigm. All digital information, which are related to an identified or identifiable subject, e.g., the social security number, should ideally be held and managed solely by the IS. With SSI, the decision whether at all, to whom and to what extent personal data (credentials) are disclosed lies solely with the owner of the credential. To establish a trust relationship between two ISs that have not yet interacted with each other, it is beneficial for the ISs to exchange credentials that have been approved by a 3rd party that are equally trusted by both ISs. So, for the purpose of trust building with SSI, an IS (role: holder) can disclose to another IS (role: verifier) its very own credentials in the form of verifiable credentials (VC) that has been previously approved, digitally signed and handed over to the holder by a 3rd IS (role: issuer). For example, a potential customer (holder) discloses its social security number, as issued by governmental authorities (issuer) as a VC, to an MNO (verifier) for setting up a mobile phone contract. The trust triangle shown in Fig. 1 in SSI is only viable if the issuer's approval of the disclosed claim is cryptographically verifiable by the actor consuming the credentials (the verifier). SSI thus not only proclaims that privacy-sensitive credentials should be hold and managed by solely the IS, but that the credentials could also be approved by a trustful 3rd party and be verified by others. This makes SSI a new fundamental concept to enforce privacy preservation and to enable trust building between actors of different trust domains.

Network elements can be provided with DIDs and DID-bound-VCs that can be used by the network element to authenticate and/or authorize itself towards other network elements in a decentralized way. The communication system can be an Intranet, a 4G, a 5G, a 6G communication system and/or a combination of those different communication systems or any other type of communication network e.g. fixed or WLAN networks. Decentralized identity management for network elements is preferred so that the risk of a "single point of failure" can be reduced. The digital identity of a network element comprises identity attributes (AuthN VCs) and authorizations (AuthZ VCs) that it requires for authentication and authorization. A decentralized key management via a VDR is preferably disclosed in order to simplify or make easier/efficiently administrable the cross-network key exchange that is needed for the decentralization of identities but also independently in general/whatever for the cross-network authentication and authorization.

An issuer, that can be a trusted authority trusted by all parties of the communication system, for example a governmental authority.

DID-bound VCs comprising attributes with which the network elements and/or network functions can prove their identity. A DID-bound VC can be used to prove identity attributes such as name (for authentication) or e.g. permission (for authorization), but at the same time to prove ownership of the DID to which the VC is bound. With a DID-bound VC, the holder thus provides the verifier with two proofs in one: DID ownership and claim ownership. The VC according to the invention can be configured to provide authentication and/or authorization information, can contain the digital signed credentials and possibly further information about the issuer. The VC can be stored in the secure wallet of the holder.

In a nutshell, this innovation describes how a user's DIDs and additional verifiable credentials (VCs), in particular DID-bound VCs, can be transported from the user's device to a 3GPP-based core network to authenticate and authorize the end user for subsequent service requests to another network and/or service.

In one embodiment, the user's DID-bound VCs are not intended to replace pre-existing network registration data or IDs such as the IMSI, SUCI and/or TMSI or any other pre-existing and transported identifier. They can also be transported in addition, but within the same procedures.

To implement this idea, the 3GPP procedures need to be modified so that they can transport not only the SUCI, IMSI and/or TMSI for SIM identification, but also the DID-bound VC of the current user with respect to an established call.

In one embodiment the DID bound VC of the end user may already be part of the UE registration message and in some other cases the DID bound VC will be transported in new 3GPP based messages from the SIM sub-subscriber (SIM holding device) to the 3GPP core network. Such a device can be a router, especially a WLAN router , or any other networking device.

The DID or VC can be stored in a database within a network or in another external database.

Fig. 2 shows an architecture overview as a communication system 50 according to a first embodiment of the invention that is configured to transport the DID-Bound-VC of a user according to the invention.

The communication system 50 comprises:
A user equipment (UE) 100. The UE 100 of Figure 2 is an entity that comprises a 3GPP network access module 110. Thus, the UE 100 can be a smart phone or a tablet. In addition, the UE has a secure storage 105, such as a digital wallet 105, in which the DID and the VC, in particular a DID-bound VC, are securely stored. The UE 100 may have a new functionality that allows the user to decide whether to use the terminal as usual (only as a network connection device) or to also register with his personal credentials (DIDs/VCs) in order to start using a particular service or to gain access to a service platform or service controller that requires user authorization and/or authentication. The UE 100 supports "new parameters" for the UE registration message as shown below.

A Radio Access Network 115 (RAN) that is configured to provide a communication link from the UE 100 to a 3GPP core network 120 (CN).

The CN 120 can take over the functionality as a verifier in this scenario. In addition to the already known IMSI/SUPI verification according to a standard procedure using a Universal Data Management node (UDM/UDR) 125, the CN 120 (i.e. the AMF 120a) additionally verifies the DID-bound VCs to allow or deny access to a service network 140, a service platform 140 or a service controller 140.

Verifiable Data Registry (VDR): The VDR 130 is a trusted entity that stores the DID documents (containing the DID and a public key) and is used to retrieve these DID documents to allow pseudo-anonymous authentication of the DID owner. The VDR 130 can be part of the operator's own network infrastructure or an external network entity, depending on the specific use case.

One reason why the DID and/or the DID-bound VC of the end user should be provided in the registration message is to enable a combined registration and authorisation process for the mobile network and access to a service network, service landscape or service controller (SC) or to provide any kind of payment information to the AMF to be able to charge for certain access/services. This additional signaling is avoided and latency is reduced.

The Service Landscape 140 or Service Controller 140 (SC) is the platform to which the user wishes to gain access. The verification of the DID-bound VC is done to authenticate the end customer and to verify the authorization to access the particular (service) endpoint. After a positive verification, the positive registration result is forwarded to the user's UE and to the Service Landscape/SSC.

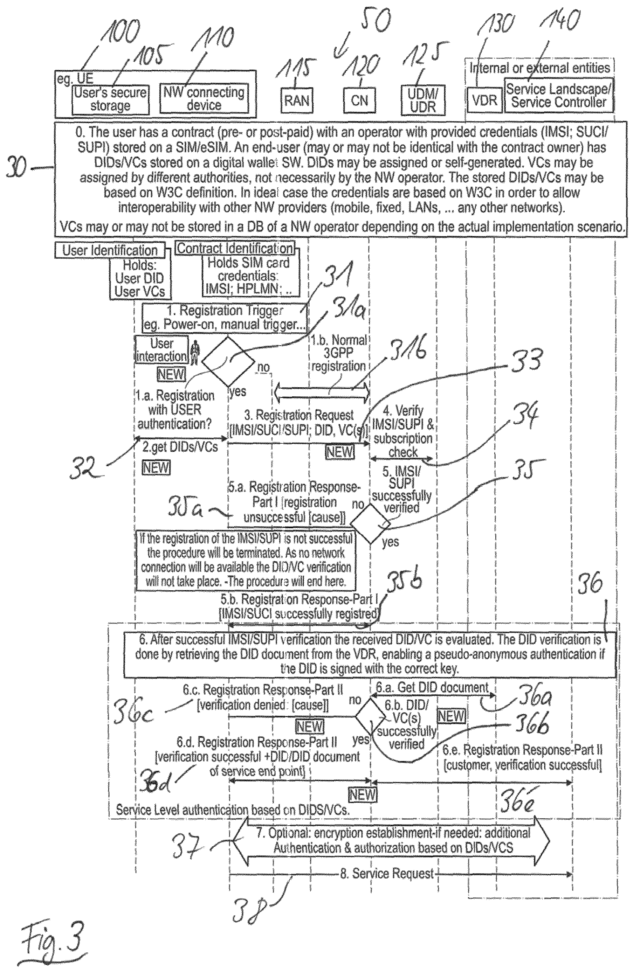

Fig. 3 shows a process diagram for a combined registration procedure for UE registration and USER authentication/authorization based on IMSI/SUPI for devices and DID-bound-VCs for human users.

Step 30: A user has a contract with a network operator who provides the user with an (e)SIM card. The (e)SIM provides the network registration information like the IMSI, SUCI or SUPI. The SIM card identifies the contract and the connectivity features that the contract holder is paying for. The SIM card is associated to the UE 100, wherein in this embodiment, the UE 100 also comprises the secure storage 105 that starts the ID of the end user, in particular the DID-bound VC. The DID and/or the VC can be based on a W3C definition to allow interoperability with other network operators. Subscriber related to the (e)SIM card may be the same or different from the user that uses the UE 100 and wants to have access to the service.

Step 31: Registration Trigger: The trigger for registering with the operator's network can be when the UE 100 is switched on, it can be triggered manually, it can be the loss of the current network or any other means specified in the standards.

Step 31a: Registration with or without User Authentication:
As soon as the network registration procedure is triggered, the UE 100 shall initiate a decision process by asking the user if the "user authentication & authorization" by using the DID and/or the DID-bound-VC should be performed, too.

If no, the "normal" 3GPP based registration procedure shall be performed according to step 31b. If yes, the procedure continues with to step 32.

Step 32 Get DID and DID-bound VC: The network access module 110 of the UE 100 requests the credentials such as the DID and the DID-bound VC from the digital wallet 105 stored on the UE 100. The digital wallet 105 provides them as requested based on the prior authorization of the corresponding user, e.g. based on using face ID, fingerprint, password, etc.

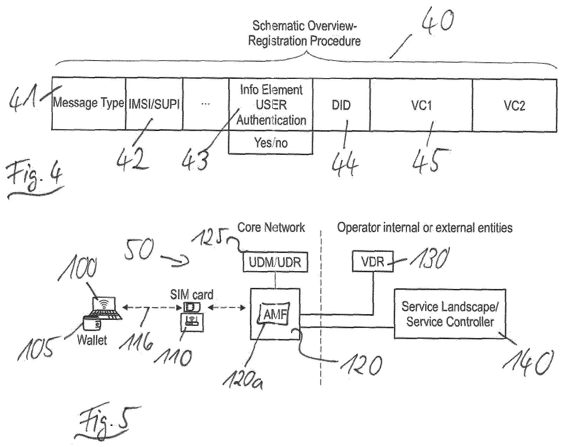

Step 33, sending a request for user verification by sending the user authorization message or by sending a network access registration message 40 as illustrated in Fig. 4 that comprises the user authorization message.

In addition to the parameters standardized in the 3GPP specifications like Message type 41, IMSI/SUPI 42, the following additional parameters shall be included in this new type of network access registration message 40:
- Indication of user verification data field 43 in this registration message based on DID/VC, in particular on DID 44 and DID-bound-VC 45: yes/no. If yes: the message shows an additional user identification information element. If no: standard UE registration message. The registration request message can also comprise identification information of the requested service.
- DID: provides at least the decentralized identifier of the user and can provide a DID method;
- VC, in particular as the DID-bound VC: shows the corresponding presentation of the verifiable credentials associated to the DID.

Step 34: Interaction with UDM/UDR 125 for IMSI/SUPI verification & subscription check:
The CN 120 first verifies the IMSI/TMSI/SUPI/SUCI based on the standard 3GPP procedure, depending on what is provided by the UE 100. This message exchange takes place between the AMF 120a and the UDM/UDR 125.

Step 35: The CN 120, in particular the AMF 120a, decision on IMSI/SUPI verification:
If the verification of the IMSI/SUPI is not successful (e.g. possibly due to subscription revocation), the result is communicated to the UE (step 35a) and the procedure is terminated.

If the verification is successful, the positive result is communicated to the UE 100 (step 35) and the verification of the DID and the DID-bound VC continues in step 36.

Step 36 verification of the DID and the DID-bound VC:
The CN 120, in particular the AMF 120a, starts the verification of the "personal" credentials received from the user. First, it requests the DID document from the VDR 130 in step 36a. This allows a pseudo-anonymous authentication if the user really is in possession of the keys belonging to the DID 44. If the contained public key of the retrieved document does not match the private key being used for encrypting the VC then the entity directly knows, that the something is wrong and can reject the request.

Step 36a Get DID document message:
Sending a request from the AMF 120a to the VDR to retrieve the user's DID document. The corresponding answer shows the user's DID. The answer is sent by the VDR to the AMF and comprises i) the DID document showing the user's DID and public key, wherein the DID is the decentralized IDentifier and the public key contains the user's public key, if messages from the client need to be decrypted or encrypted. The DID document may contain additional NON-PERSONAL data depending on the use case.

Step 36b: the AMF 120a verifies the received DID-bound VCs by checking the VC signatures (issuer verification). The Verifiable Credential (VC) can comprise i) the DID of the user, ii) information on the issuer, iii) information on the service for which the user verification is intended, and/or iv) any restriction characteristics (e.g. time, location ...)

If the user cannot be successfully verified, a 'verification denied' message is sent from the CN 120 to the UE 100 in step 36c.

If successful verification of the DID and the DID-bound VC was performed, this result is communicated to the UE in step 36d. This message may contain i) successful verification information, ii) DID and DID document of the service 140 and/or service end point address (URI; IP address; ....) to use and access the requested service.

Optionally, a positive verification can also be communicated to the requested Service Landscape 140, which can also be listed in the VC(s) according to step 36e. Optionally, the positive verification for a certain service or financial flow may be communicated and stored to/in any relevant backend system (UDM/UDR, Billing System, service, ...).

Optional step 37: After successful verification of the user's credentials he is allowed to access the service landscape or the service 140, if needed encryption can be established between the UE 100 and the Service Landscape 140 or the SC 140 based on the DIDs/VCs.

Optional step 38: After successful encryption establishment, the UE 100 can send a service request for a particular service to the Service Landscape 140 or the SC 140.

The ordering of the steps of Fig. 3 can vary according to the needs of the actual implementation. In particular, the messages according to the steps 35a and 36c and the according to steps 35b and 36d can be combined to one message.

Fig. 5 shows an architecture overview according to a second embodiment of the invention.

This embodiment introduces new messages for user authentication and/or authorization based on DIDs/VCs after successful 3GPP registration, in particular if the network access module 110 is different from the UE 100 and wherein the UE 100 is in particular a non-3GPP device. This embodiment allows very flexible implementation of the invention. Fig. 5 shows the embodiment in which the network access module 110 the UE 100 comprising the secure storage 105 are separate devices.

Fig. 5 shows:
The UE 100 the user uses to use a service.

The secure storage 105: The secure storage 105 can be located on any type of UE 100 that can connect to a network. In this case, the storage device is physically separate from the network access module 110 providing connectivity to a 3GPP based network. E.g. the UE 100 can be tablet without SIM Card information that uses WLAN to connect to a WLAN-router 110. The UE can have an own (e)SIM but without using it but instead connecting to the WLAN network.

The network access module 110: The network access module 110 is a router that provides a WLAN interface for the UE 110 and a 3GPP based mobile interface to connect to the Internet via a 3GPP based mobile network. The network access module 110 needs additional functionality compared to today's devices to allow the transport of DIDs/VCs to the core network in messages separate from the IMSI registration message. The UE 100 and the network access module 110 can be connected via a communication channel 116 that can be a WLAN channel. Additionally, a new functionality can be needed to transport the credentials from the UE 100 to the network access module 110.

The CN 120: The core network 120 acts as a verifier in this embodiment. In addition to the already known verification of the IMSI/SUPI together with the UDM/UDR (which is standard compliant), the CN 120 (i.e. the AMF 120a) additionally verifies the additionally received credentials such as DIDs & DID-bound-VCs to allow or deny access to a service network 140, service platform 140 or service controller 140.

UDM/UDR 125: The Universal Data Management Node 125 is required for standard compliant IMSI/SUPI verification, and may store additionally used credentials (DIDsNCs) via a particular subscription (IMSI).

VDR 130: The Verifiable Data Registry 130 is the trusted entity that stores the DID documents (containing the DID and the public key) and is used to retrieve these DID documents to allow pseudo-anonymous authentication of the DID owner. The VDR 130 can be part of the operator's own network infrastructure or an entity external to the network, depending on the specific use case.

When the mobile WLAN router 110 is connected to a 3GPP-based network via its SIM card, any user of the WLAN can authenticate to this 3GPP network and be authorized based on their own personal IDs (DIDs/VCs) to access a dedicated service landscape 140 or request any other sort of permission based on the used VCs.

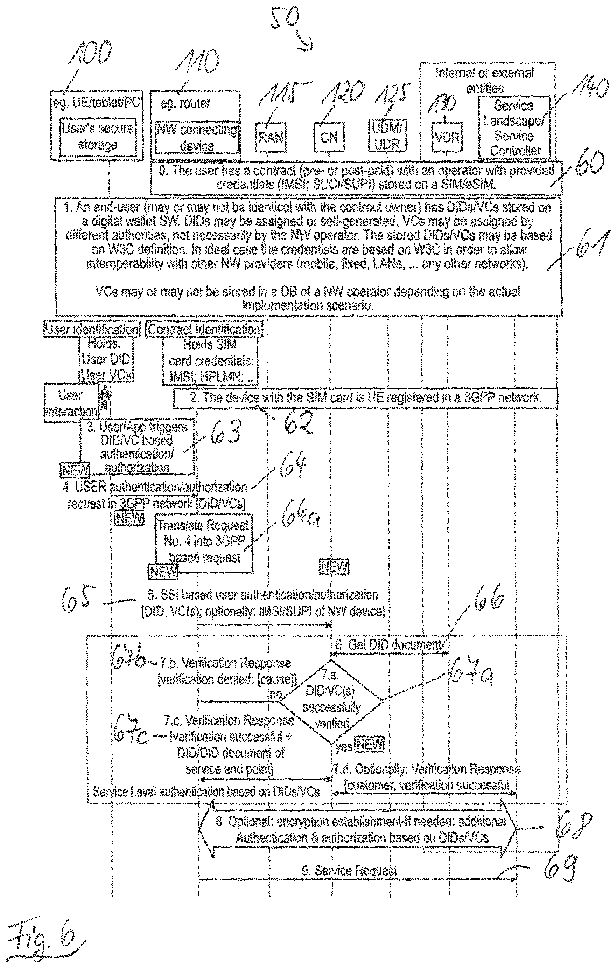

The sequence of Fig. 6 shows the message flow between the different entities.

Step 60: The user hosting the network access module has a contract (pre-paid or post-paid) with a network operator and a valid (e)SIM with associated credentials (IMSI/SUPI).

Step 61: The user using the UE 100 has a DID and a DID-bound VC stored in the UE. The network access module 110 has a valid and active connection to a 3GPP network. The user may or may not be the holder of the contract with the network operator.

Step 62: The network access module 110 comprising the (e)SIM has an active registration and connection to a 3GPP network.

Step 63: Either the user or an application that wants to use a service triggers the authentication and/or authorization of the DID and the DID-bound-VC of the user.

Step 64: as a user authentication and/or authorization request, the DID and the DID-bound-VC are transmitted from the UE 100 to the network access module 110, wherein the network access module 110 triggers the user authentication and/or authorization request to the CN 120. The interaction with the wallet is analog as described above.

In step 64a, the network access module 110 can translate the user authentication and/or authorization request into a 3GPP format, in particular if the UE is a non-3GPP device.

Step 65: The 3GPP compatible user authentication and/or authorization request comprising the DID and the DID-bound-VC is send from the network access module 110 to the CN 120. Step 65 can comprise sending the network registration message. The message can look like shown in Fig. 4, at least it comprises the DID 44 and the VC 45 data fields.

Step 66, the CN 120, in particular the AMF 120a, retrieves the DID document of the user from the VDR 130 to verify the DID 44.

Step 67a, the CN 120 verifies the DID with the DID document received from the VDR and verifies the received DID-bound-VCs by checking the signatures.

Step 67b, if the DID or the DID-bound VC cannot be successfully verified, the AMF 120a rejects the verification, the process is broken at his stage.

Step 67c, if the DID and the DID-bound VC can be successfully verified, the AMF 120a returns a successful response to the UE 100 that can comprise the DID and/or DID document of the service 140. Additionally, the service 140 can be provided by the CN 120 with the information of successful verification of the user in step 67d.

Steps 68 and 69, after successful authentication and/or authentication, the user can contact the service 140. In addition, the service 140 may again perform more specific authorization procedures (for certain services) or trigger encryption of the data exchange.

## Claims

1. Method for authentication and authorization of a user in a network environment, wherein the method comprises the following steps:
• Storing by a UE (100) a user Identifier (ID) as a Decentralized IDentifier (DID, (44)) and a DID-bound-Verifiable Credential (VC, (45));
• Provisioning by a SIM or an eSIM (S.3) network registration data of a 3GPP network provider to a 3GPP network access module (110) of the UE;
• Sending a network access registration message (62, 31b) by the network access module (110) to the Core Network (CN), wherein the network access registration message comprises the network registration data of the 3GPP network provider and registering the network access module (110) in the core network;
• The network access module (110) of the UE (100) requests the ID as a DID (44) and a DID-bound-VC (45) from a digital wallet (105) stored on the UE (100);
• Sending by the UE a request for user verification by sending a user authentication message comprising the DID and the DID-bound-VC to the 3GPP Core Network by means of the network access module (110);
• wherein based on the DID (44) and the DID-bound-VC (45) a verification unit (120,120a) performs the user authentication and authorization process, whereby, if successful verification of the DID and the DID-bound-VC was performed, this result is communicated to the UE to allow access to a requested service.

2. The method according to claim 1, **characterized in that** the verification unit (120, 120a) is assigned to the 3GPP Core Network (CN).

3. UE (100) designed for authentication and authorization of users in network environments, wherein the UE is configured
• to comprise a digital wallet (105) for storing a user identifier (ID) as a Decentralized IDentifier (DID, 44) and a DID-bound-Verifiable Credential (DID-bound-VC, 45);
• to comprise a 3GPP network access module (110);
• to receive network registration data of a 3GPP network provider from a SIM or an eSIM and to provide it to the 3GPP network access module (110);
• to send a network access registration message comprising the network registration data to a Core Network (CN) by means of the network access module (110);
• to retrieve the DID (44) and the DID-bound-VC (45) from the digital wallet (105) upon request of the network access module (110);
• to send a user authorization message comprising the DID and the DID-bound-VC to the 3GPP Core Network by means of the network access module (110) and
• to receive from the 3GPP Core Network a verification result from a verification unit (120, 120a), based on which the user of the UE is granted access to a requested service.

## Patentansprüche

1. Verfahren zur Authentifizierung und Autorisierung eines Benutzers in einer Netzwerkumgebung, wobei das Verfahren die folgenden Schritte umfasst:
• Speichern einer Benutzerkennung (ID) als dezentralisierte Kennung (DID, (44)) und einer DID-gebundenen überprüfbaren Berechtigung (VC, (45)) durch ein UE (100);
• Bereitstellung von Netzregistrierungsdaten eines 3GPP-Netzbetreibers durch eine SIM-Karte oder eine eSIM (S.3) an ein 3GPP-Netzzugangsmodul (110) des UE;
• Senden einer Netzwerkzugangsregistrierungsnachricht (62, 31b) durch das Netzwerkzugangsmodul (110) an das Kernnetz (CN), wobei die Netzwerkzugangsregistrierungsnachricht die Netzwerkregistrierungsdaten des 3GPP-Netzbetreibers umfasst, und Registrieren des Netzwerkzugangsmoduls (110) im Kernnetz;
• Das Netzwerkzugangsmodul (110) des UE (100) fordert die ID als DID (44) und eine DID-gebundene VC (45) von einer auf dem UE (100) gespeicherten digitalen Geldbörse (105) an;
• Senden einer Anfrage zur Benutzerüberprüfung durch das UE, indem eine Benutzerauthentifizierungsnachricht, die die DID und die DID-gebundene VC umfasst, durch das Netzwerkzugangsmodul (110) an das 3GPP-Kernnetz gesendet wird;
• wobei basierend auf der DID (44) und der DID-gebundenen VC (45) eine Verifizierungseinheit (120, 120a) den Benutzerauthentifizierungs- und -autorisierungsprozess durchführt, wobei bei erfolgreicher Verifizierung der DID und der DID-gebundenen VC dieses Ergebnis an die UE übermittelt wird, um den Zugriff auf einen angeforderten Dienst zu ermöglichen.

2. Verfahren nach Anspruch 1, **dadurch gekennzeichnet, dass** die Verifizierungseinheit (120, 120a) dem 3GPP-Kernnetz (CN) zugeordnet ist.

3. UE (100), das für eine Authentifizierung und Autorisierung von Benutzern in Netzwerkumgebungen ausgestaltet ist, wobei das UE eingerichtet ist
• eine digitale Geldbörse (105) zum Speichern einer Benutzerkennung (ID) als dezentralisierte Kennung (DID, 44) und einer DID-gebundenen überprüfbaren Berechtigung (DID-bound-VC, 45) zu umfassen;
• ein 3GPP-Netzwerkzugangsmodul (110) zu umfassen;
• Netzwerkregistrierungsdaten eines 3GPP-Netzwerkbetreibers von einer SIM-Karte oder einer eSIM zu empfangen und diese an das 3GPP-Netzwerkzugangsmodul (110) weiterzuleiten;
• eine Netzwerkzugangsregistrierungsnachricht, die die Netzwerkregistrierungsdaten umfasst, durch das Netzwerkzugangsmodul (110) an ein Kernnetzwerk (CN) zu senden;
• die DID (44) und die DID-gebundenen VC (45) aus der digitalen Geldbörse (105) auf Anfrage des Netzwerkzugangsmoduls (110) abzurufen;
• eine Benutzerautorisierungsnachricht, die die DID und die DID-gebundene VC umfasst, durch das Netzwerkzugangsmodul (110) an das 3GPP-Kernnetz zu senden und
• vom 3GPP-Kernnetz ein Verifizierungsergebnis von einer Verifizierungseinheit (120, 120a) zu empfangen, auf dessen Grundlage dem Benutzer des UE der Zugang zu einem angeforderten Dienst gewährt wird.

## Revendications

1. Procédé d'authentification et d'autorisation d'un utilisateur dans un environnement de réseau, le procédé comprenant les étapes suivantes :
• stockage par un UE (100) d'un identifiant (ID) d'utilisateur en tant qu'identifiant décentralisé (DID, (44)) et d'un justificatif vérifiable (VC, (45)) lié au DID ;
• fourniture par une SIM ou une eSIM (S.3) de données d'inscription de réseau d'un fournisseur de réseau 3GPP à un module (110) d'accès au réseau 3GPP de l'UE ;
• envoi, par le module (110) d'accès au réseau au réseau central (CN), d'un message (62, 31b) d'inscription d'accès au réseau le message d'inscription d'accès au réseau comprenant les données d'inscription de réseau du fournisseur de réseau 3GPP et inscription du module (110) d'accès au réseau dans le réseau central ;
• demande, par le module (110) d'accès au réseau de l'UE (100), de l'ID en tant que DID (44) et d'un VC (45) lié au DID à partir d'un portefeuille numérique (105) stocké sur l'UE (100) ;
• envoi par l'UE d'une requête de vérification d'utilisateur par l'envoi d'un message d'authentification d'utilisateur, comprenant le DID et le VC lié au DID, au réseau central 3GPP au moyen du module (110) d'accès au réseau ;
• où, sur la base DU DID (44) et du VC (45) lié au DID, une unité (120, 120a) de vérification réalise le processus d'authentification et d'autorisation de l'utilisateur, de sorte que, si la vérification du DID et du VC lié au DID a été effectuée, ce résultat est communiqué à l'UE pour permettre l'accès à un service demandé.

2. Procédé selon la revendication 1, **caractérisé en ce que** l'unité (120, 120a) de vérification est affectée au réseau central (CN) 3GPP.

3. UE (100) conçu pour l'authentification et l'autorisation d'utilisateurs dans des environnements de réseau, l'UE étant configuré
• pour comprendre un portefeuille numérique (105) servant à stocker un identifiant (ID) d'utilisateur en tant qu'identifiant décentralisé (DID, 44) et un justificatif vérifiable lié au DID (VC lié au DID, 45) ;
• pour comprendre un module (110) d'accès au réseau 3GPP ;
• pour recevoir des données d'inscription de réseau d'un fournisseur de réseau 3GPP provenant d'une SIM ou d'une eSIM et les fournir au module (110) d'accès au réseau 3GPP ;
• pour envoyer à un réseau central (CN), au moyen du module (110) d'accès au réseau, un message d'inscription d'accès au réseau comprenant les données d'inscription de réseau ;
• pour récupérer le DID (44) et le VC (45) lié au DID à partir du portefeuille numérique (105) sur demande du module (110) d'accès au réseau ;
• pour envoyer au réseau central 3GPP un message d'autorisation d'utilisateur comprenant le DID et le VC lié au DID au moyen du module (110) d'accès au réseau et
• pour recevoir en provenance du réseau central 3GPP un résultat de vérification provenant d'une unité (120, 120a) de vérification, sur la base duquel l'utilisateur de l'UE se voit accorder l'accès à un service demandé.
